# EUROPÄISCHE PATENTSCHRIFT

(11) **EP 1 282 387 B1**
(45) Veröffentlichungstag und Bekanntmachung des Hinweises auf die Patenterteilung: **05.09.2007**
(21) Anmeldenummer: 01938207.6
(22) Anmeldetag: 09.05.2001
(51) Int. Cl.: A61J 3/00, A23G 3/26, B01J 2/00

(54) **VORRICHTUNG ZUR BESCHICHTUNG VON GRANULATEN UND KERNEN**
DEVICE FOR THE COATING OF GRANULATES AND SEEDS
DISPOSITIF POUR REVETIR DES GRANULES ET DES GRAINS

(30) Priorität: 19.05.2000 DE 10024407
(43) Veröffentlichungstag der Anmeldung: 12.02.2003
(73) Patentinhaber: Driam Anlagenbau GmbH, 88097 Eriskirch (DE)
(72) Erfinder: NOHYNEK, Oliver, CH-9000 St. Gallen (CH)
(74) Vertreter: Riebling, Peter
(86) Internationale Anmeldenummer: PCT/EP2001/005238
(87) Internationale Veröffentlichungsnummer: WO 2001/089446

(56) Entgegenhaltungen:
- EP-A- 0 355 771
- EP-A- 0 376 009
- EP-A- 0 382 160
- EP-A- 0 717 932
- DE-A- 4 036 697
- US-A- 4 499 847
- US-A- 4 639 383

## Beschreibung

Gegenstand der Erfindung ist eine Vorrichtung zur Beschichtung von Granulaten und Kernen nach dem Oberbegriff des Patentanspruchs 1.

Aus der DE 40 36 697 C2 ist bereits eine derartige Vorrichtung bekannt geworden, deren Offenbarungsinhalt vollinhaltlich von der vorliegenden Erfindungsbeschreibung umfaßt sein soll.

Derartige Vorrichtungen, die auch unter der Bezeichnung "Dragiermaschine" gebräuchlich sind, werden zur Beschichtung von Granulaten und Kernen, insbesondere in der pharmazeutischen Industrie, aber auch in der Lebensmittel- und insbesondere in der Süßwarenindustrie, verwendet.

Es handelt sich um relativ große, drehend angetriebene Trommeln, in denen die zu beschichtende Kerne angeordnet sind. In die Trommel greifen ein oder mehrere Düsenleisten ein, über die während des Drehbetriebes eine Überzugsmasse auf die in der Trommel rotierend bewegten Kerne oder Granulate verteilt wird.

Hierzu ist eine ausgefeilte Luftführung notwendig, mit der Aufgabe, ein Zusammenkleben der mit einer meist klebrigen Überzugsmasse zu beschichtenden Kerne zu vermeiden.

Solche Maschinen müssen nach Vollendung des Beschichtungsprozesses umfassend gereinigt werden. Die Reinigungen sind schwierig, denn die Trommel ist nur schwer zugänglich, weil sie an entsprechende Luftanschlüsse angeschlossen und von einem Gehäuse abgedeckt ist.

Es ist bekannt, die Trommel durch entsprechende Zugangsöffnungen zu reinigen, wobei in die Zugangsöffnungen Sprühdüsen eingebracht werden, die das Reinigungsmittel in der Trommel verteilen.

Nachteil der bekannten Reinigung ist jedoch, daß die Luftführungs- und Luftabführungskanäle der Trommel nicht oder nur mit hohem Aufwand gereinigt werden können.

Der Stand der Technik zeigt dazu die EP-A-0 382 160, die EP-A-0 376 009 und die US-A-4,639 383. Die EP-A-0 382 160 zeigt ein Verfahren zum Granulieren und Beschichten und eine dazugehörige Vorrichtung. Diese Druckschrift zeigt eine Anordnung für ein Luftverteilsystem, im zugangsseitigen Bereich der Trommel. Diese Anordnung wirkt sich bei der Bedienung störend aus. Die Abdeckungen der Luftleitkanäle ist mittels aufgesteckter Abdeckungen realisiert, die so ausgebildet sind, dass sie über entsprechend ausgebildete Aufnahmen übergestülpt werden. Bei der Reinigung der Trommel werden diese einfach abgezogen, und müssen dann separat gereinigt werden und erfordern zusätzlich eine Ablagefläche, die zur Zwischenlagerung bis zu Wiederinbetriebnahme der Anlage dienen. Dies ist einerseits platztechnisch nachteilig und andererseits auch hinsichtlich hygienischer Anforderungen.

Die EP-A-0 376 009 beschreibt eine Dragiervorrichtung mit einer polygonalen, horizontal liegenden angetriebenen Trommel mit Belüftungseinrichtungen und einem in einer Seite des Polygons liegenden Deckel, der vermittels einer Betätigungsvorrichtung herausnehmbar ist und sich dabei automatisch ent- und verriegelt. Auch hier bestehen wieder die bereits zur EP-A-0 382 160 dargelegten Nachteile in der Ausgestaltung der Vorrichtung.

Die US-A-4,639,383 beschreibt ebenfalls ein Verfahren und eine Vorrichtung für die Beschichtung von granulären Produkten von Tabletten bis Dragees und dgl. mehr. Die Anforderungen an die Beschichtungen werden dahingehend beschrieben, dass die Beschichtungen die Produkte verschließen oder mit speziellen chemischen Aufbereitungen versehen sollen, beispielsweise mit pharmazeutischen Beschichtungen. Die Luftzufuhr erfolgt bei dieser Druckschrift mittels zweier gehäuseseitig fest positionierter Schächte die direkt an die Trommel anliegend angeordnet sind.

Einer dieser Schächte ist für die Zufuhr und einer für die Abfuhr der Trocknungsluft vorgesehen. Die Zufuhr der Trocknungsluft in die Trommel erfolgt durch in der Trommel angeordnete Löcher, an die ein innenliegendes Gitter anschließt, auf welchem die granulierten Produkte für den Beschichtungsvorgang aufgebracht werden. Luftführungskanäle wie nach den beiden EP-Druckschriften sind in diesem Fall nicht vorgesehen, wodurch lediglich in dem Bereich ein Trocknungseffekt für die granulierten Produkte erzielt wird, der zwischen dem Zufuhrkanal und dem Abfuhrkanal für die Trocknungsluft liegen. Eine vollständige Belüftung der gesamten Trommel ist hier also nicht vorgesehen.

Bezüglich der Reinigung der einzelnen Bauteile bestehen gegenüber der beiden EP-Druckschriften andere Anforderungen, da die Schächte für die Trocknungsluft gehäusefest angeordnet sind, und keine trommelseitigen Luftverteileinheiten vorhanden sind. Dies wird durch den Nachteil der nur in einem Teilbereich der Trommel wirksamen Belüftung erreicht.

Der Erfindung liegt deshalb die Aufgabe zugrunde, eine Vorrichtung der eingangs genannten Art so auszugestalten, daß sie insgesamt besser gereinigt werden kann. Insbesondere sollen auch die Luftzuführungs- und -abführungskanäle mit hohem Wirkungsgrad schnell gereinigt werden können.

Zur Lösung der gestellten Aufgabe ist die Erfindung durch die technischen Lehren der Ansprüche 1, 5 und 6 gekennzeichnet.

Wesentliches Merkmal der Erfindung ist, daß die Luftverteilung an der Trommel über eine, fest an der Trommel stirnseitig angebrachte Luftverteilerscheibe erfolgt, der gegenüberliegend eine nichtdrehbare, gehäuseseitige Luftverteilerscheibe angeordnet ist , die in axialer Richtung zur Trommel zu- und wegstellbar ausgebildet ist und luftschlüssig mit der Trommel kuppelbar ist.

Mit der gegebenen technischen Lehre ergibt sich der wesentliche Vorteil, daß nun die gesamte Luftverteilung und -abführung zur Trommel zu- und wegstellbar ausgebildet ist, weil an der Stirnseite der Trommel eine nichtdrehbare Luftverteilerscheibe vorgesehen ist, die in axialer Richtung zur Trommel zu- und wegstellbar ist.

Damit ergibt sich der Vorteil, daß die gehäuseseitige Luftverteilerscheibe zu Reinigungszwecken von der Stirnseite der Trommel abgehoben werden kann, wodurch einerseits die in die Stirnseite der Trommel einmündenden Luftkanäle frei werden und dort sehr leicht gereinigt werden können und wobei auch andererseits der gehäuseseitige Teil der Luftzuführung zur Trommel leicht zugänglich wird und schnell zu inspizieren und zu reinigen ist.

Eine derartige zu- und wegstellbare gehäuseseitige Luftverteilerscheibe hat also auch den Vorteil, daß sämtliche trommelnahen und trommelseitigen Luftführungen optisch inspiziert werden können. Damit kann festgestellt werden, ob sich noch irgendwelche Fremdkörper oder Reste von anderen Produkten im Luftsystem befinden. Ein erneutes Beschicken der Trommel wird dann aus Hygienegründen vermieden. Es ergeben sich also wesentlich bessere Inspektions- und Reinigungsmöglichkeiten, sowohl für die gehäuseseitigen als auch für die trommelseitigen Luftzuführungs- und -abführungskanäle.

Der Verschiebeantrieb für die axiale Verschiebung der gehäuseseitigen Luftverteilerscheibe kann in vielfältigen Ausführungsformen verwirklicht werden. In einer bevorzugten Ausgestaltung ist es vorgesehen, daß der Verschiebeantrieb durch mehrere, gleichmäßig am Umfang verteilt angeordnete, Schubzylinder erfolgt. Das eine Ende des Schubzylinders stützt sich an einem gehäusefesten Anschlag ab, während das andere Ende, z. B. die Kolbenstange, an der gehäuseseitigen Luftverteilerscheibe ansetzt.

In einer bevorzugten Ausgestaltung sind hierbei drei derartige Schubzylinder gleichmäßig am Umfang verteilt angeordnet.

In einer anderen Ausgestaltungen sind selbstverständlich auch andere axiale Verschiebeantriebe für die Luftverteilerscheibe möglich, wie z. B. ein Elektromagnet, ein Spindelantrieb, ein Linearmotor oder ein Hydraulikzylinder.

Nach einem weiteren Merkmal der Erfindung, welches, unabhängig von der vorher erwähnten axialen, verschiebbar angetriebenen Luftverteilerscheibe, Schutz genießen soll, ist vorgesehen, daß auch die trommelseitigen Luftkanäle besonders leicht zu reinigen sind.

Nach diesem weiteren Merkmal ist vorgesehen, daß die trommelseitigen Kanäle radial auswärts jeweils durch eine Luftkanalabdeckungen abgedeckt sind, die sich im wesentlichen etwa über die gesamte axiale Länge der Trommel erstreckt und die ebenfalls radial zur Trommel zu- und wegstellbar ausgebildet ist.

Damit ergibt sich der wesentliche Vorteil, daß durch Abheben und ggf. Verschwenken der Luftkanalabdeckungen auch die trommelseitigen Luftkanäle nun leicht zugänglich gemacht werden können.

Für die Zu- und Wegstellbewegungen der Luftkanalabdeckungen gibt es verschiedene Ausführungsformen, die sämtlich vom vorliegenden Erfindungsgedanken umfaßt sein sollen.

In einer ersten Ausgestaltung der Erfindung ist es vorgesehen, daß die Luftkanalabdeckungen, jeweils mit ihren links- und rechtsseitigen Befestigungen an der Trommel, etwa parallel zur Mantelfläche der Trommel von dieser Mantelfläche abhebbar und zustellbar ausgebildet sind. Hierzu sind die beiden, einander gegenüberliegenden Befestigungen mit geeigneten Kniehebeln versehen. Mit der manuellen oder vorrichtungsgesteuerten Betätigung dieser Kniehebel kann somit jede Luftkanalabdeckung in radialer Richtung von der Trommel abgehoben werden, so daß sich ein in axialer Richtung der Trommel erstreckender Reinigungsspalt zwischen der Trommelfläche und der abgehobenen Luftkanalabdeckung ergibt.

Eine Reinigung wird dadurch erreicht, daß in der Abhebestellung der Luftkanalabdeckungen die Trommel mit ihrem unteren Teil in eine unterhalb der Trommel angeordnete, mit Reinigungslösung gefüllten Wanne eintaucht. Die Reinigungslösung dringt über den erwähnten Reinigungsspalt zwischen die Trommelmantelfläche und die abgehobenen Luftkanalabdeckungen ein und reinigt somit alle trommelseitigen Luftkanäle.

Nach einem anderen, weiteren Merkmal der Erfindung kann es vorgesehen sein, daß die Luftkanalabdeckung nicht nur parallel und in senkrechter Richtung zur Mantelfläche der Trommel abhebbar ist, sondern sie kann noch zusätzlich (oder auch nur allein und ausschließlich) von der Trommel an- und abschwenkbar ausgebildet sein.

D. h. also, die jeweilige Luftkanalabdeckung ist jeweils einseitig schwenkbar an der Trommel gelagert und kann von der Trommel weg und zu ihr verschwenkt werden.

Beide Bewegungsmöglichkeiten, d. h. also, sowohl die parallele Abhebebewegung der Luftkanalabdeckung von der Trommel als auch die Schwenkbewegung einer einseitig an der Trommel schwenkbar gelagerten Luftkanalabdeckung sollen von der vorliegenden Erfindung als erfindungswesentlich getrennt voneinander geschützt werden.

Die vollständige Abschwenkung der Luftkanalabdeckung hat nämlich den Vorteil, daß damit die Luftkanalabdeckung vollkommen von der Trommel abgeschwenkt werden und innenseitig optisch inspiziert werden kann. Sie kann auch vollständig entfernt werden. D. h., sie ist leicht lösbar in ihrem einseitig angeordneten Schwenklager gelagert.

In einer bevorzugten Ausgestaltung sind gleichmäßig am Umfang der Trommel verteilt neun Luftanschlußöffnungen angeordnet, von denen jede in einen zugeordneten Luftkanal mündet. Jeder Luftkanal ist demzufolge durch eine Luftkanalabdeckung abschließbar, die, entsprechend der vorherstehenden Beschreibung, entweder radial bewegbar oder ein- oder zweiseitig schwenkbar zur Trommel ausgebildet ist.

Beide Bewegungsmechanismen, nämlich die radial Bewegung wie auch die Schwenkbewegung können in einer einzigen Vorrichtung vereinigt sein.

Bevorzugt erfolgt dies durch die Anordnung eines Doppelhebelmechanismus, der dafür sorgt, daß die beiden Enden der Luftkanalabdeckung jeweils bei der Betätigung eines, an jeweils einem Ende angeordneten Doppelhebels gleichmäßig von der Trommel abgehoben wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert einen Schnitt durch eine Vorrichtung nach der Erfindung;
- Figur 2:: schematisiert eine Stirnansicht in Richtung des Pfeils II, Figur 1;
- Figur 3:: schematisiert eine Draufsicht auf die Stirnseite der gehäuseseitigen Luftverteilerscheibe;
- Figur 4:: schematisiert eine Draufsicht auf die Stirnseite der trommelseitigen Luftverteilerscheibe;
- Figur 5:: ein vergrößerter Ausschnitt aus der Darstellung in Figur 1 mit Darstellung weiterer Einzelheiten des Verschiebemechanismus für dieLuftkanalabdeckungen.
- Figur 6:: eine Trommel mit einer Luftkanalabdeckung in Schließstellung
- Figur 7:: die Trommel nach Figur 6 mit geöffneter Luftkanalabdeckung
- Figur 8 :: die Trommel nach Figur 6 mit abgeschwenkter Luftkanalabdeckung

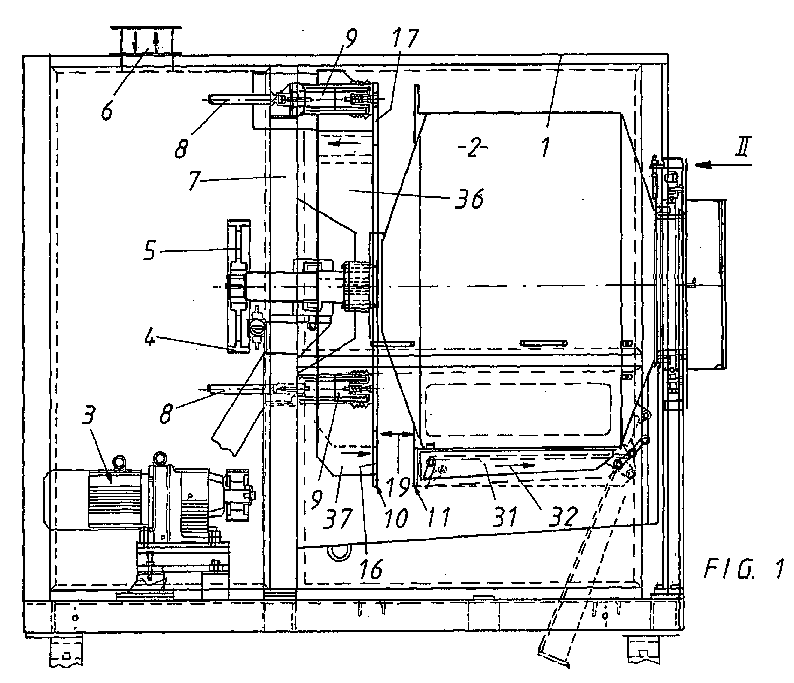

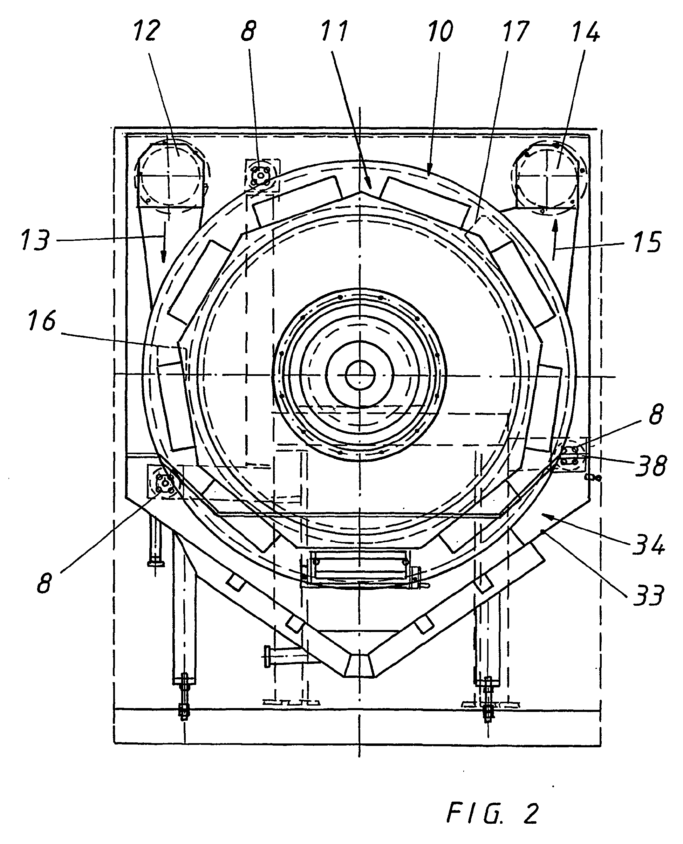

In den Figuren 1 und 2 ist allgemein in einem Gehäuse 1 eine drehbar angetriebene Trommel 2 gelagert.

Der Drehantrieb erfolgt hierbei über einen Antriebsmotor 3, der über einen Riemen 4 auf die Antriebsscheibe 5 arbeitet, welche drehfest mit einer entsprechenden Antriebswelle verbunden ist, die ihrerseits fest mit der einen Stirnseite der Trommel 2 verbunden ist.

Auf der gegenüberliegenden Seite ist die Trommel 2 in nicht näher dargestellten Drehlagern gelagert.

Die Luftzuführung in das Gehäuse 1 erfolgt über mehrere Luftstutzen 6, von denen lediglich einer schematisiert in Figur 1 dargestellt ist. Es ist angedeutet, daß ein Teil der nicht näher dargestellten Luftstutzen 6 für die Zuluft und andere Luftstutzen 6 für die Abluft vorgesehen sind.

Die Zuluft und die Abluft werden über elastische Schläuche an die zugeordneten Luftzuführ- und Luftabführöffnungen 16, 17 einer gehäusefest angeordneten Luftverteilerscheibe 10 zugeführt.

Die Luftverteilerscheibe 10 ist an einer festen Wand 7 in axialer Richtung zur Trommel 2 verschiebbar angetrieben. Als Verschiebeantrieb sind hierbei drei Schubzylinder 8 vorgesehen, die mit dem einen Ende an der gehäusefesten Wand 7 und mit dem anderen Ende an der Luftverteilerscheibe 10 befestigt sind.

Es sind lineare Schiebelager 9 vorgesehen, welche die Schiebeführung für die Luftverteilerscheibe 10 im Gehäuse 1 bewerkstelligen.

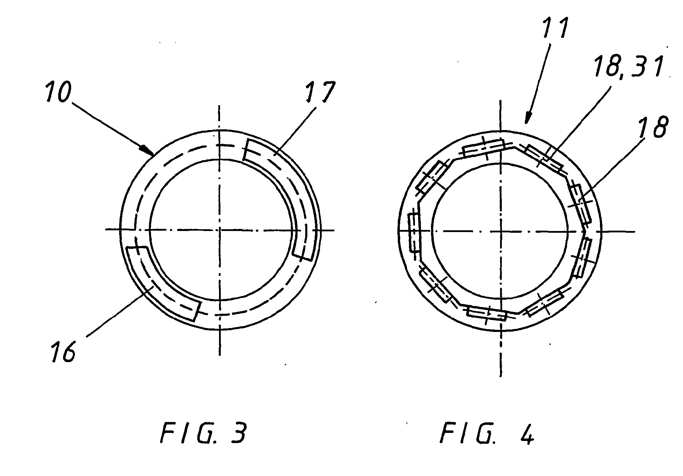

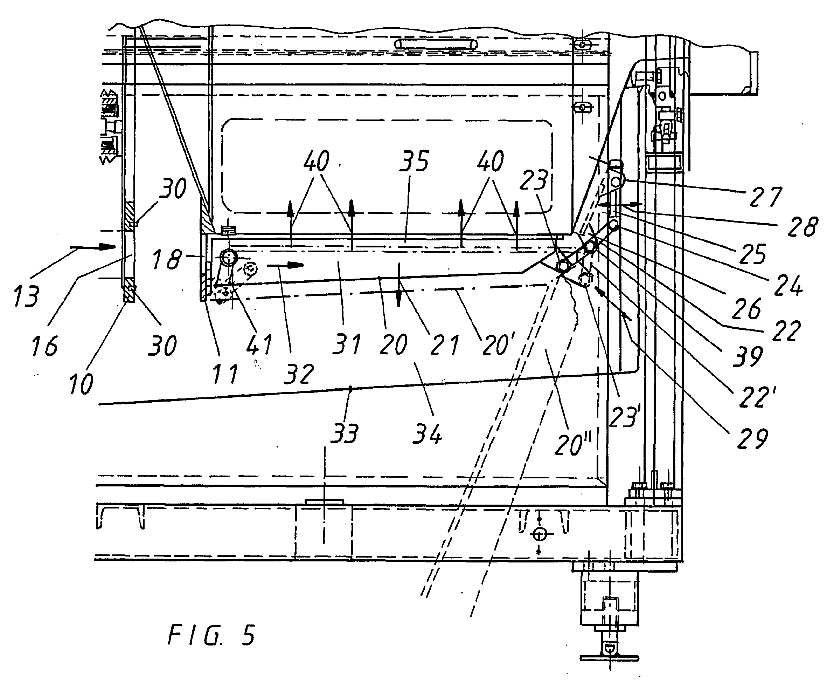

In Figur 1 und auch in Figur 5 ist erkennbar, daß die Luftzuführöffnung 16 - nach Figur 3 mit sektorringförmiger Gestalt - im unteren Teil der Luftverteilerscheibe 10 mündet, während schräg gegenüberliegend die sektorringförmige Luftabführöffnung 17 in der Luftverteilerscheibe 10 angeordnet ist.

Die Stirnseite der Trommel 2 weist eine ähnliche, trommelfeste Luftverteilerscheibe 11 auf, wobei in dieser Luftverteilerscheibe 11, gemäß Figur 4, beispielsweise insgesamt neun, gleichmäßig am Umfang verteilt angeordnete, Luftanschlußöffnungen 18 vorgesehen sind.

In der in Figur 1 dargestellten Reinigungsstellung ist die gehäuseseitige Luftverteilerscheibe 10 von der trommelseitigen Luftverteilerscheibe 11 zurückgefahren und nimmt einen durch den Doppelpfeil 19 gekennzeichneten Abstand ein.

In der Betriebsstellung ist hierbei die Luftverteilerscheibe 10 nach rechts verfahren, so daß die Luftzuführöffnungen 16 in Gegenüberstellung und abdichtender Verbindung mit den trommelseitigen Luftanschlußöffnungen 18 gelangen.

Zur gegenseitigen Abdichtung sind die in Figur 5 dargestellten Dichtungen 30 vorgesehen, welche den rotierenden Teil gegenüber dem feststehenden Teil abdichten.

In Figur 2 ist noch dargestellt, daß von dem Luftzuführungskanal 12 die Zuluft in Pfeilrichtung 13 über die nicht näher dargestellten elastischen Verbindungen in die Luftzuführöffnungen 16 der Luftverteilerscheibe 10 einströmt, während andererseits von der Luftabführöffnung 17 die Abluft in Pfeilrichtung 15 in den Luftabführungskanal 14 strömt und dort aus dem Gehäuse entnommen wird.

Insgesamt kann noch festgestellt werden, daß die Luftverteilerscheibe 10 Teil von zwei gegeneinander abgedichteten, getrennten Gehäuseteilen 36, 37 ist. Das eine Gehäuseteil 36 dient zur Einführung der Zuluft, während das andere Gehäuseteil zur Abführung der Abluft dient. Die entsprechenden Zu- und Abluftschläuche münden also in diese Gehäuseteile 36, 37 und werden dann zu den entsprechenden sektorringförmigen Ausströmöffnungen 16, 17 geleitet.

Unabhängig von der axial verschiebbaren Luftverteilerscheibe 10, die zu der rotierenden Luftverteilerscheibe 11 zu- und wegstellbar ist, soll nach dem weiteren Erfindungsgegenstand die Reinigung der trommelseitigen Luftkanäle geschützt werden.

Hierzu ist erfindungsgemäß vorgesehen, daß jede trommelseitige Luftanschlußöffnung 18 mit jeweils einer radial außenliegenden Luftkanalabdeckung 20 versehen ist, die von dem in der Trommel integrierten Luftkanal 31 zu- und wegstellbar ausgebildet ist.

Hierzu wird auf die Figur 5 bis 8 Bezug genommen.

Man erkennt insgesamt drei verschiedene Funktionsstellungen der Luftkanalabdeckungen 20, 20', 20". In der Betriebsstellung ist die Luftkanalabdeckung 20 abdichtend an der Trommel angelegt und bildet somit ihre betriebsmäßige Funktionsstellung, die in Figur 5 mit durchgezogenen Linien dargestellt ist.

Über den noch später zu beschreibenden Kniehebelverschließmechanismus kann die Luftabdeckung 20 in Pfeilrichtung 21 in ihre erste Funktionsstellung 20' gebracht werden, wo sie etwa parallel von der Mantelfläche und senkrecht zur Mantelfläche der Trommel abgehoben ist und sich hierbei ein Reinigungsspalt 35 bildet, durch den dann Reinigungsflüssigkeit in den Innenraum des Luftkanals 31 einströmen kann. Hierzu ist es vorgesehen, daß im Gehäuse unterhalb der Trommel eine Wanne angeordnet ist, in welche bedarfsweise eine Reinigungsflüssigkeit eingeleitet werden kann. Zur Reinigung taucht die Trommel in die mit Reinigungslösung gefüllten Wanne 34 ein, wobei der Wannenboden 33 etwa im Schnitt mittensymmetrisch ausgebildet ist und die Reinigungslösung sich etwa bis zur Position 38 in Figur 2 erstreckt.

Wenn also nun die Luftabdeckung in die Stellung 20' abgehoben wurde, taucht der gesamte untere Teil der Trommel mit den dort abgehobenen Luftabdeckungen 20' in die Reinigungslösung in die Wanne 34 ein und die Reinigungslösung kann so leicht in den gesamten, trommelseitigen Luftkanal 31 eindringen.

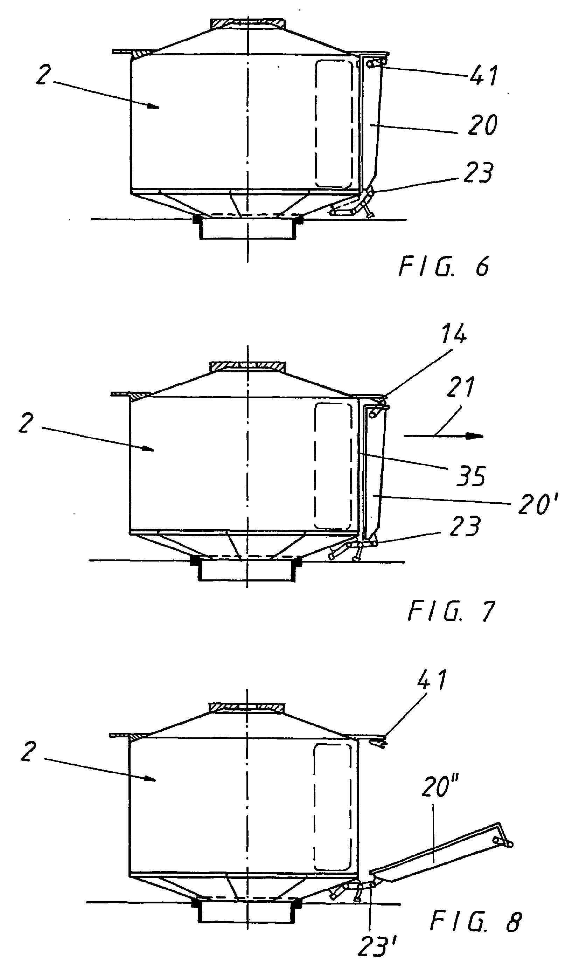

In einer zweiten Stellung ist es zusätzlich vorgesehen, daß die gesamte Luftabdeckung 20 auch in eine Stellung 20" abgeschwenkt werden kann (Fig. 5 und 8). Hierzu ist es vorgesehen, daß die Luftabdeckung in einem Schwenklager 23 schwenkbar gelagert ist, das an dem freien schwenkbaren Ende eines Doppelhebels 22 angeordnet ist. Dieser Doppelhebel ist mit seinem mittleren Schwenklager 39 an einer trommelfesten Lasche 26 befestigt, und das andere Ende des Doppelhebels 22 ist hierbei in einem Schwenklager 34 gelagert, welches durch das eine Ende einer Feder 25 vorgespannt wird, deren anderes Ende sich an einem trommelfesten Federlager 27 anlegt.

Durch einen nicht näher dargestellten Verschiebemechanismus kann somit der gesamte Doppelhebel 22 um das Schwenklager 39 herum in den Pfeilrichtungen 28 verschwenkt werden, wobei dieser Antriebsmechanismus beispielsweise in Pfeilrichtung 29 auf das untere Schwenklager 23 einwirken kann.

Es kann sich hierbei um eine gehäusefest angeordnete Druckrolle handeln, die zum Zweck der Verschwenkung der Luftkanalabdeckung 20 im Schwenklager 23 in Pfeilrichtung 29 auf dieses Schwenklager drückt und hierbei den Doppelhebel 22 in der typischen Art der Kinematik eines Kniehebels in eine zweite stabile Lage verschwenkt, wobei die Feder 25 die stabile zweite Lage fixiert.

Dieser Doppelhebel oder Kniehebel kann demzufolge aufgrund der zwei stabilen Federstellungen auch wieder in die andere Stellung zurückgedrückt werden.

Insgesamt wird in Figur 5 noch angegeben, daß die Luftzuführung von der Luftzuführöffnung 16 in der Luftverteilerscheibe 10 sich in Pfeilrichtung 32 im Luftkanal 31 fortsetzt und daß dann diese Luft im Luftverteilerkanal in den Pfeilrichtungen 40 gleichmäßig radial in die Trommel verteilt wird.

Auf der Abluftseite erfolgt genau die umgekehrte Luftführung, die in analoger Weise wie die in Zuluftrichtung geschilderte Luftzuführung abläuft. Im übrigen ist selbstverständlich vorgesehen, daß die hier angegebenen Begriffe wie "Luftzuführung" und "Luftabführung" auch umgedreht werden können, weil es betriebsmäßig vorgesehen ist, daß in bestimmten Betriebszuständen die Luftrichtung umgedreht wird.

Ein einfacherer Kniehebelverschluß ist auf der linken Seite der Figur 5 für die Anlenkung der Luftkanalabdeckung an der Trommel 2 dargestellt. Dieser Verschluß kann in einer ersten Öffnungsstellung entweder vollständig geöffnet werden, um das Abschwenken der Luftkanalabdeckung in die Schwenkstellung 20 " zu gestatten oder er kann in einer zweiten Öffnungsstellung nur teilweise geöffnet werden, um ein Abheben der Luftkanalabdeckung in die Stellung 20 ' zu erlauben. Es ist nicht lösungsnotwendig, daß auf dieser Seite ein Kniehebelverschluß angeordnet ist. Es kann durchaus ausreichen, einen Verschluß vorzusehen, der nur die erste Öffnungsstellung erlaubt, nicht aber die zweite Öffnungsstellung. In diesem Fall handelt es sich dann um einen einfachen Spannverschluß. Bei diesem Ausführungsbeispiel ergibt sich dann kein Reinigungsspalt mit über der Länge gleichmäßigen Breite, sondern ein über die Länge sich erstreckender, etwa keilförmiger Reinigungsspalt.

### Zeichnungslegende

- 1: Gehäuse
- 2: Trommel
- 3: Antriebsmotor
- 4: Riemen
- 5: Antriebsscheibe
- 6: Luftstutzen
- 7: Wand
- 8: Schubzylinder
- 9: Schiebelager
- 10: Luftverteilerscheibe (Gehäuse)
- 11: Luftverteilerscheibe (Trommel)
- 12: Luftzuführungskanal
- 13: Pfeilrichtung
- 14: Luftabführungskanal
- 15: Pfeilrichtung
- 16: Luftzuführungsöffnung
- 17: Luftabführungsöffnung
- 18: Luftanschlußöffnungen
- 19: Doppelpfeil
- 20: Luftkanalabdeckung 20', 20"
- 21: Pfeilrichtung
- 22: Doppelhebel
- 23: Schwenklager 23'
- 24: Schwenklager
- 25: Feder
- 26: Lasche
- 27: Federlager
- 28: Schwenkrichtung
- 29: Pfeilrichtung
- 30: Dichtung
- 31: Luftkanal
- 32: Pfeilrichtung
- 33: Wannenboden
- 34: Wanne
- 35: Reinigungsspalt
- 36: Gehäuseteil (Abluft)
- 37: Gehäuseteil (Zuluft)
- 38: Position
- 39: Schwenklager
- 40: Pfeilrichtung
- 41: Kniehebelverschluß

## Patentansprüche

1. Vorrichtung zur Beschichtung von Granulaten und Kernen, Pellets und Dragees mit einer oder mehreren Überzugsmassen, wobei die zu beschichtenden Kerne in einer drehbar angetriebenen Trommel angeordnet sind, in welche gehäusefeste Einbauten, insbesondere Sprüh- und Reinigungsarme hineinragen, wobei an die Trommel Luftanschlüsse anschließen, über welche der Innenraum der Trommel mit Luftströmung beaufschlagt ist, wobei die Luftverteilung an der Trommel (2) über eine, fest an der Trommel stirnseitig angebrachte Luftverteilerscheibe des Rotationverteilers (11) erfolgt, der gegenüberliegend eine nichtdrehbare, gehäuseseitige Luftverteilerscheibe des Rotationverteilers (10) zugeordnet ist, die in axialer Richtung zur Trommel (2) zu- und wegstellbar ausgebildet ist und luftschlüssig mit der Trommel (2) kuppelbar ist, **gekennzeichnet durch** eine mit Reinigungsflüssigkeit befüllbare Wanne (34), und **dadurch**, da**ß** die Trommel (2) mindestens mit ihrem unteren Teil in die Wanne (34) eintaucht.

2. Vorrichtung nach Anspruch 1, **dadurch gekennzeichnet, daß** der axiale Verschiebeantrieb für die gehäuseseitige Luftverteilerscheibe des Rotationverteilers (10) aus mehreren Schubzylindern (8) besteht, deren einer Teil sich jeweils an einer gehäusefesten Wand (7) und deren anderer Teil an der Luftverteilerscheibe (10) angreift.

3. Vorrichtung nach Anspruch 1 oder 2, **dadurch gekennzeichnet, daß** die Luftzuführ- und -abführöffnungen (16, 17) in der gehäuseseitigen Luftverteilerscheibe des Rotationverteilers (10) jeweils kreisringsektorförmig ausgebildet sind und sich diametral gegenüberliegen.

4. Vorrichtung nach einem der Ansprüche 1 bis 3 **dadurch gekennzeichnet, daß** die gehäuseseitige Luftverteilerscheibe des Rotationverteilers (10) luftschlüssig mit der drehenden, trommelseitigen Luftverteilerscheibe des Rotationverteilers (11) kuppelbar ist, in der mehrere, am Umfang verteilt angeordnete Luftanschlußöffnungen (18) angeordnet sind, welche in Überdeckung mit den kreisringsektorförmigen Luftzuführ- und -abführöffnungen (16, 17) in Überdeckung bringbar sind.

5. Vorrichtung nach einem der Ansprüche 1 bis 4, **dadurch gekennzeichnet, daß** trommelseitige, luftführende Kanäle (31) radial auswärts jeweils durch eine Luftkanalabdeckung (20) abgedeckt sind, die radial, etwa parallel zur Mantelfläche der Trommel (2) zu- und wegstellbar ausgebildet ist, so dass sich dazwischen ein Reinigungsspalt (35) ausbildet.

6. Vorrichtung nach Anspruch 5, **dadurch gekennzeichnet, daß** die Luftkanalabdeckungen (20) mittels Kniehebelverschlüssen an der Trommel (2) befestigt sind.

## Claims

1. Device for the coating of granulates and seeds, pellets and dragées with one or more coatings, wherein the seeds to be coated are arranged in a rotatably driven drum, into which fittings fixed to the housing, in particular spray and cleaning arms project, wherein air connections adjoin the drum, via which air connections the interior of the drum is subjected to an air stream, the air distribution to the drum (2) taking place by means of an air distributor disc of the rotary distributor (11) rigidly attached on the end face to the drum, a non-rotatable, housing-side air distributor disc of the rotary distributor (10) being associated therewith, in an opposing manner, which is configured so as to be movable toward and away from the drum (2) in the axial direction and can form an air coupling to the drum (2), **characterised by** a trough (34) which can be filled with cleaning fluid, and in that the drum (2), at least with its lower part, enters into the trough (34).

2. Device according to claim 1, **characterised in that** the axial displacement drive for the housing-side air distributor disc of the rotary distributor (10) consists of a plurality of thrust cylinders (8), one part of which engages in each case on a wall (7) fixed to the housing and the other part of which engages on the air distributor disc (10).

3. Device according to claim 1 or 2, **characterised in that** the air supply and discharge openings (16, 17) in the housing-side air distributor disc of the rotary distributor (10) are in each case configured in the shape of a ring segment and oppose one another diametrically.

4. Device according to any one of claims 1 to 3, **characterised in that** the housing-side air distributor disc of the rotary distributor (10) can form an air coupling to the rotating, drum-side air distributor disc of the rotary distributor, in which are arranged a plurality of air connection openings (18), arranged distributed on the periphery, which can be brought into an overlapping arrangement with the ring segment-shaped air supply and removal openings (16, 17).

5. Device according to any one of claims 1 to 4, **characterised in that** drum-side air-guiding ducts (31) are radially outwardly covered in each case by an air duct cover (20), which is configured so as to be radially movable toward and away approximately parallel to the outer surface of the drum (2), so a cleaning gap (35) is configured therebetween.

6. Device according to claim 5, **characterised in that** the air duct covers (20) are fastened to the drum (2) by means of an articulated lever locks.

## Revendications

1. Dispositif pour enrober des granulés et des noyaux, des pastilles et des dragées avec une ou plusieurs masses d'enrobage, dans lequel les noyaux à enrober sont disposés dans un tambour entraîné en rotation dans lequel dépassent des éléments encastrés solidaires du carter, en particulier des bras de pulvérisation et de nettoyage, des raccordements d'air grâce auxquels l'intérieur du tambour est exposé à un écoulement d'air font suite au tambour, et la répartition de l'air dans le tambour (2) se fait par l'intermédiaire d'un disque diffuseur d'air du répartiteur rotatif (11) qui est fixé au côté frontal du tambour et auquel est associé, à l'opposé, un disque diffuseur d'air (10) non rotatif prévu côté carter qui est conçu pour pouvoir être rapproché et éloigné du tambour (2) dans le sens axial et qui est apte à être accouplé au tambour (2) en vue d'une circulation d'air,
**caractérisé par** une cuve (34) apte à être remplie de liquide de nettoyage, et en ce que le tambour (2) est immergé au moins avec sa partie inférieure dans la cuve (34).

2. Dispositif selon la revendication 1, **caractérisé en ce que** l'entraînement de déplacement axial pour le disque diffuseur d'air prévu côté carter (10) se compose de plusieurs cylindres de coulissement (8) dont une partie agit au niveau d'une paroi (7) solidaire du carter et dont l'autre partie agit au niveau du disque diffuseur d'air (10) .

3. Dispositif selon la revendication 1 ou 2, **caractérisé en ce que** les ouvertures d'amenée et d'évacuation d'air (16, 17) prévues dans le disque diffuseur d'air prévu côté carter (10) ont la forme de secteurs d'anneau circulaire et sont diamétralement opposées.

4. Dispositif selon l'une des revendications 1 à 3, **caractérisé en ce que** le disque diffuseur d'air prévu côté carter (10) est relié en vue d'une circulation d'air au disque diffuseur d'air rotatif prévu côté tambour du diffuseur rotatif (11) dans lequel sont disposées plusieurs ouvertures de raccordement d'air (18) réparties sur la circonférence et aptes à venir recouvrir les ouvertures d'amenée et d'évacuation d'air (16, 17) en forme de secteurs d'anneau circulaire.

5. Dispositif selon l'une des revendications 1 à 4, **caractérisé en ce que** des conduits de passage d'air situés côté tambour (31) sont couverts chacun, radialement vers l'extérieur, par un recouvrement de conduit d'air (20) qui est conçu pour pouvoir être rapproché et éloigné radialement, à peu près parallèlement à la surface latérale du tambour (2), ce qui forme entre les deux un interstice de nettoyage (35).

6. Dispositif selon la revendication 5, **caractérisé en ce que** les recouvrements de conduit d'air (20) sont fixés au tambour (2) à l'aide de fermetures à genouillère.
